Europäisches Patentamt

European Patent Office

Office européen des brevets

(11) Publication number: **0 425 852 A1**

## EUROPEAN PATENT APPLICATION

(21) Application number: 90119420.9

(51) Int. Cl.5: **B62D 25/18**

(22) Date of filing: **10.10.90**

(30) Priority: **13.10.89 JP 267504/89**

(43) Date of publication of application:
**08.05.91 Bulletin 91/19**

(84) Designated Contracting States:
**DE FR**

(71) Applicant: **Bridgestone Corporation
10-1, Kyobashi 1-Chome Chuo-Ku
Tokyo 104(JP)**

(72) Inventor: **Takeshi, Nakayama
2-8-33, Murata, Chigasaki-shi,
Kanagawa-ken(JP)**
Inventor: **Shigeo, Kuriyama
1274-9, Totuka-cho, Totuka-ku,
Yokohama-shi,
Kanagawa-ken(JP)**

(74) Representative: **Huss, Carl-Hans, Dipl.-Ing.
Patentanwalt Griesstrasse 3 a Postfach 14 54
W-8100 Garmisch-Partenkirchen(DE)**

(54) Vehicle mudguard.

(57) The present invention is a vehicle mudguard comprising a front member (1) having openings facing the tire side, and a back member (2) arresting and draining water passed through the openings. And a space is formed between the front and back members. A first invention has draining ribs (4) fitted on the front part of the back member in the vertical direction, and has a plurality of projections (5) arranged, at least, among the draining ribs. A second invention has a water-permeable middle member having a three-dimensional, irregular-shaped foam structure situated in a space between the front and back members.

F I G . 1

## VEHICLE MUDGUARD

### BACKGROUND OF THE INVENTION

Field of the Invention:

The present invention relates to a vehicle mudguard for attachment to right after a tire in order to mainly prevent vehicle paint from becoming dirty and coming off caused by muddy water and pebbles splashed up by the tire; to protect the electric installation of the vehicle; and to insure safety driving of following vehicles by preventing splashing.

Description of the Prior Art:

Concerning conventional vehicle mudguards, a vehicle spray inhibitor disclosed in U.K. Patent Application GB 2,132,148A is generally known. However, its construction is complicated and yet insufficient for preventing the scattering of muddy water.

### SUMMARY OF THE INVENTION

An object of the present invention is to provide a vehicle mudguard making it possible to effectively prevent the scattering of muddy water with a relatively simple construction.

In order to achive the above-mentioned object, the present invention comprises a front member having openings facing the tire side, a back member arresting and draining water passed through the openings, a space made between the both members, draining ribs fitted on the front part of the back member in the vertical direction and a plurality of projections arranged, at least, among the draining ribs. In addition, the present invention comprises a front member having openings facing the tire side, a back member arresting and draining water passed through the openings, a space made between the both members, and a middle member having water permeability as well as a three-dimensional, irregular-shaped foam structure situated in between the space.

When the mudguard of the present invention is fitted to just after a tire, muddy water splashed by the tire strikes against the front member with great force. However, as openings are formed on the member, except some of the muddy water adheres to the member, the greater part of it passes through the member. Water passed through the openings hits the back member, and the projections formed on the front part of the back member absorb incident energy of the water, and the draining ribs induce the water to drop onto a road surface. In cace of the mudguard having the middle member, the middle member serves as a buffer for the bumping water, and drops the most part of it onto the road surface without splashing. Accordingly, muddy water splashed by the tire is prevented from splattering, and the vehicle body is prevented from becoming dirty, and the safety driving of following vehicles can be insured. In addition, as the mudguard of this invention has the above-mentioned formation, the construction thereof is comparatively simple, and it can be made at a low cost.

### BRIEF DESCRIPTION OF THE DRAWINGS

FIG. 1 is a plan view of a first embodiment of the present invention;

FIG. 2 is a front view of a front member;

FIG. 3 (a) is a sectional view of the front member taken along line A - A in FIG. 2;

FIGS. 3 (b) and (c) are sectional views similar to FIG. 3 (a) except using lateral members of which shapes are different from those of FIG. 3 (a) ;

FIG. 4 is a front view of a back member;

FIG. 5 is a sectional view of a draining ribs;

FIG. 6 is a sectional view of a projection;

FIG. 7 is a front view of a modification of the front member;

FIG. 8 is a side view of FIG. 7;

FIG. 9 is a bottom view of FIG. 7;

FIG. 10 is a perspective view of another modification of the front member;

FIG. 11 is a view illustrating an action of surface films shown in FIG. 10;

FIG. 12 is a sectional view illustrating an embodiment that the surface films are fitted on the backside of longitudinal members;

FIGS. 13 to 16 are front views of other modifications of the front member;

FIG. 17 shows front views of an example that several units of the front member are first manufactured and joined together;

FIG. 18 is sectional views of the front member taken along line B - B in FIG. 17;

FIGS. 19 to 21 are front views showing a few examples of the draining rib;

FIG. 22 is a perspective view of a modification of the projection;

FIGS. 23 to 25 are front views of arrangement examples of the projections;

FIG. 26 is a perspective view of an example that umbrellas are formed on tops of the projections;

FIGS. 27 to 29 are plan views showing modifications of the back member;

FIG. 30 is a sectional view of an example that the front and back members are fixed;

FIG. 31 is a perspective view in partial section showing another example that the front and back members are fixed;

FIG. 32 is a perspective view of a female screw used in the example of FIG. 31;

FIG. 33 is a perspective view of yet another fixing example;

FIG. 34 is a sectional view of a fastening used in FIG. 33;

FIG. 35 is an exploded perspective view showing a fixing method;

FIG. 36 is a plan view of another fixing method;

FIG. 37 is a plan view of yet another fixing method;

FIG. 38 is a front view of a locking member used in FIG. 37;

FIGS. 39 and 40 are a side and front views of still another fastening;

FIG. 41 is an illustration showing that the front and back members are to be fixed by the fastening of FIG. 39;

FIG. 42 is a perspective view of another different fastening;

FIG. 43 is a perspective view of yet another different fastening;

FIG. 44 is a plan view of a fastening section that still another different fastening is formed on the back member;

FIG. 45 is a plan view showing a fixing method using the fastening of FIG. 44;

FIG. 46 is a sectional view showing another fixing method;

FIG. 47 is a plan view showing yet another fixing method;

FIG. 48 is a front view of a modification of the back member;

FIG. 49 is a plan view in partial section showing the relation between the front member and the back member of FIG. 48;

FIG. 50 is a plan view of the mudguard using a middle member;

FIG. 51 is a front view of the back member of FIG. 50; and

FIG. 52 is a simple side view showing that the mudguard of the present invention is attached near the tire.

DATAILED DESCRIPTION OF THE PREFERRED EMBODIMENTS:

Preferred embodiments of the present invention will now be described with reference to the accompanying drawings;

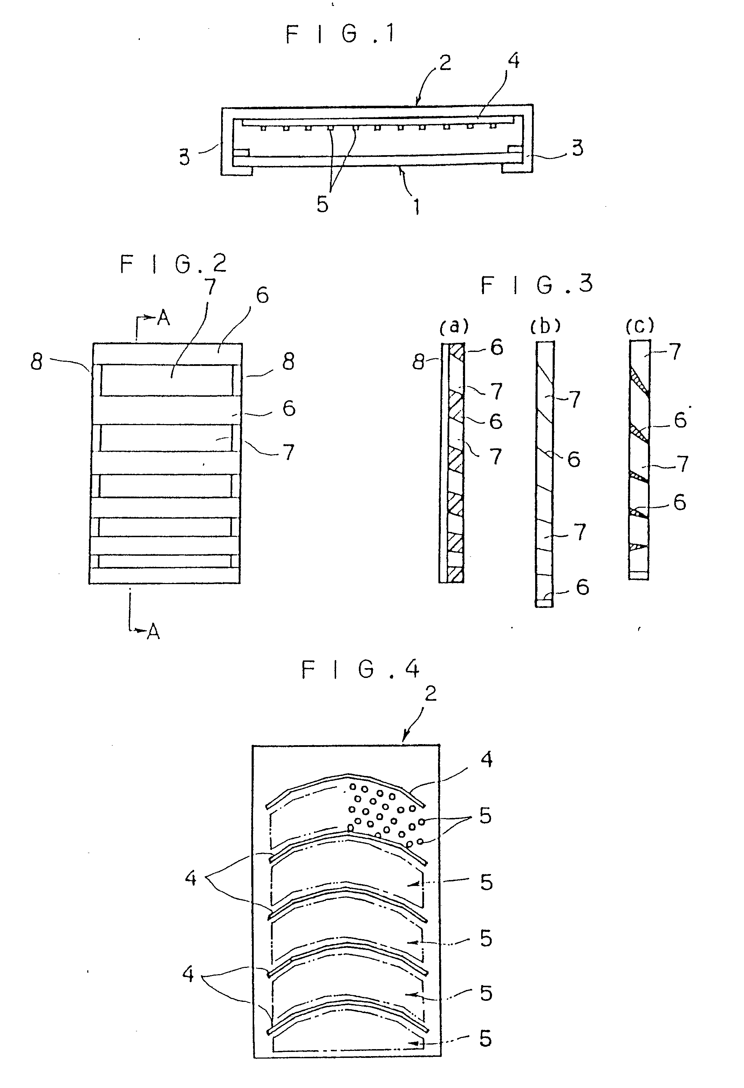

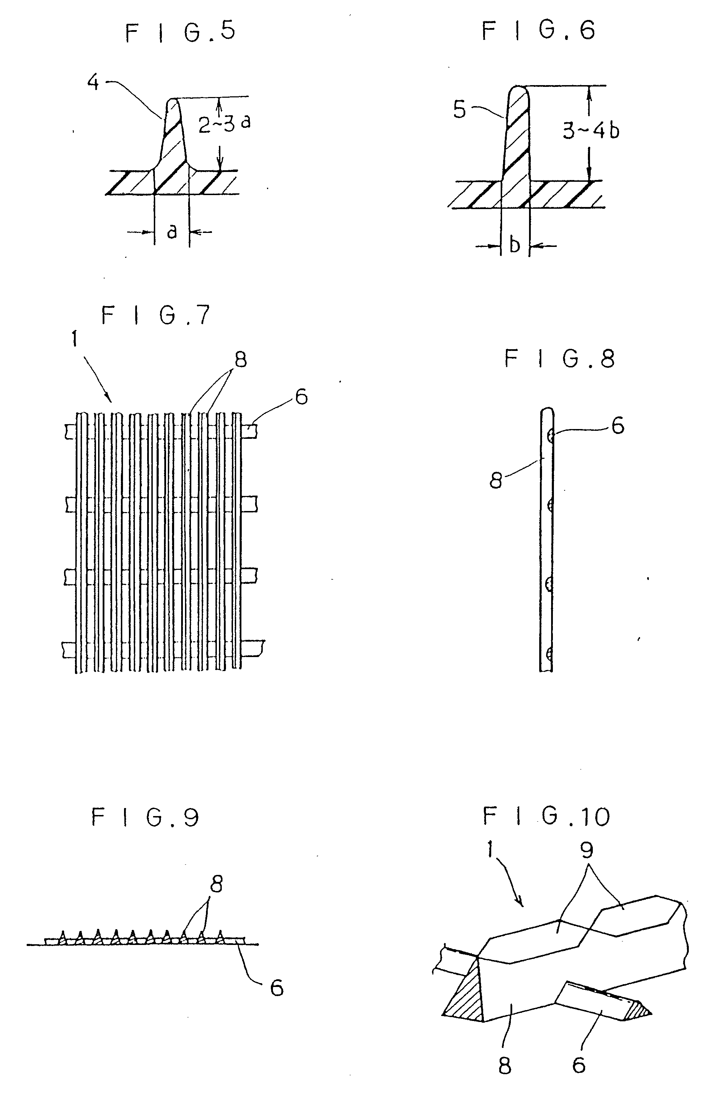

A first embodiment shown in FIG. 1 consists of a front member 1 to be attached to right after the tire and a back member 2 fitted to the back side of the front member 1 with a space between the two members. A L-shaped part 3 is formed on each side of the back member 2 to fix the front member 1. Draining ribs 4 are fitted on the front part of the back member 2 in the vertical direction, and a plurality of projections 5 are arranged among the draining ribs 4. As shown in FIG. 2 and FIG. 3 (a), lateral members 6 are arranged at some intervals on the front member 1, and openings 7 are formed between the lateral members 6. The lateral members 6 may be directly fitted to the L-shaped parts 3 or to the longitudinal members 8 as illustrated. In case of the first embodiment, vertical widths of the openings 7 are so formed that width of the top opening 7 is widest and those of other openings gradually become narrower toward the bottom of the openings 7. In addition, the openings 7 incline upward from the front to the backside respectively. This is to have muddy water pass efficiently to the back member 2 under the consideration that an incidence angle of muddy water splashed by the tire becomes gradually higher and higher. FIGS. 3 (b) and (c) indicate modifications of the front member 1 using lateral members 6 of which shapes are different. As shown in FIG. 4, five draining ribs 4 each having a shape that both ends thereof decline gradually downward from the center are arraanged on the back member 2 at regular intervals in the vertical direction. And many projections 5 are formed between the draining ribs 4 and below the lowest draining ribs 4. The height of the draining ribs 4 is each formed at two to three times as high as width "a" of their bases as shown in FIG. 5. The height of the projections 5 is each formed, as shown in FIG. 6, at three to four times as high as width "b" of their bases. A diameter of the top of the projections 5 is set at 1/3b to 2/3b. The projections 5 are not always formed upright as against the base of the back member 2, but may irregularly incline within the scope of 3-12 ˚. An ideal number of the projections 5 is two to six per 1 $cm^2$. When the number increases more than that, the draining efficiency decreases on the back member 2. The both ends of the draining ribs 4 decline downward respectively, which makes muddy water hitting against the back member 2 drop onto the road surface.

The front member 1 and the back member 2 may be fabricated from metal sheet such as stainless steel. It is, however, desirable to be formed of such materials as polypropylene, high-density polyethylene, EVA, PVC, rubber and thermoplastic elastomer from the standpoint of light weight and safety in case of being damaged and dropping.

The openings 7 of the front member 1 require to have an opening rate of approx. 50 percent as against a total surface area thereof.

FIGS. 7 to 9 show modifications of the front member 1 consisting of the lateral members 6 and the longitudinal members 8 positioned in front of the members 6. Although in these figures, triangular longitudinal members 8 in cross section are employed, quite round ones or oval ones in cross section may be used. The same may be applied to the lateral members 6.

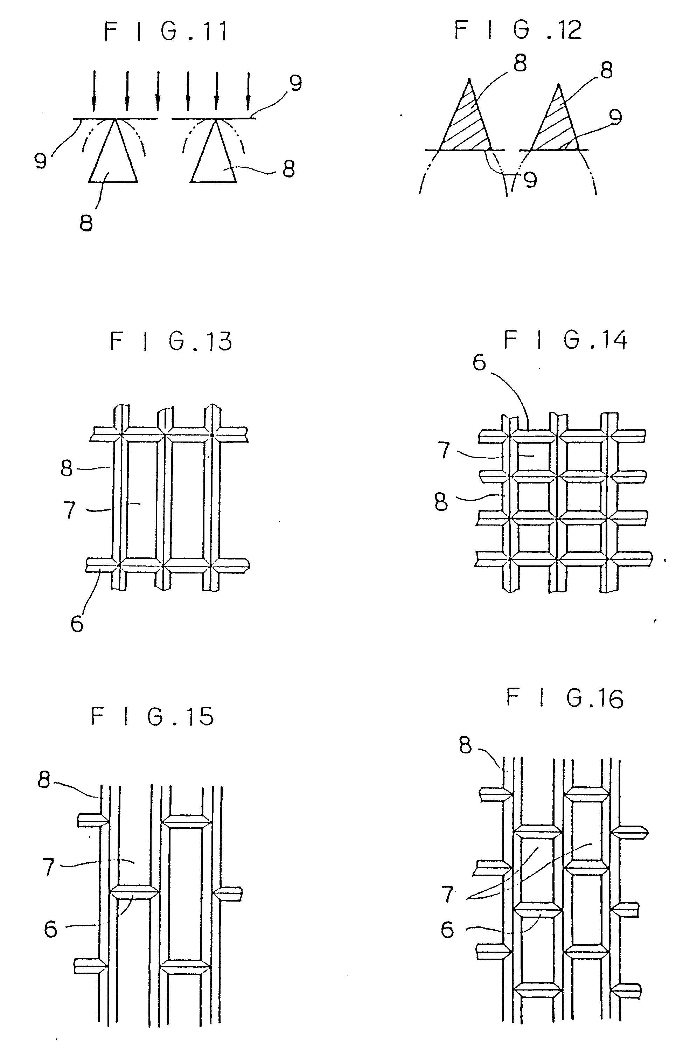

The front member 1 shown in FIG. 10 indicates the surface films 9 which are fitted on the front side of the sectionally traingular longitudial member 8 and which are to be bent backward by hydraulic pressure of muddy water splashed by the tire. FIG. 11 illustrates the state that the surface films 9 are to be bent backward by the pressure. The surface films 9 as mentioned above may be fitted onto the backside of the longitudinal members 8(see FIG. 12). Further, the surface films 9 may be fitted on the top of the lateral members 6 situated on the front side or on the base of said members 6 situated on the backside in order to cover part of the openings 7. The presence of the surface films 9 is effective for reducing reflaction of muddy water.

FIGS. 13 to 16 show modifications of the front member 1 respectively: FIG. 13 shows the rectangular openings 7 formed by the longitudinal members 8 and the lateral members 6, while FIG. 14 shows the square openings 7. FIGS. 15 and 16 show the rectangularly staggered-shape openings 7 respectively.

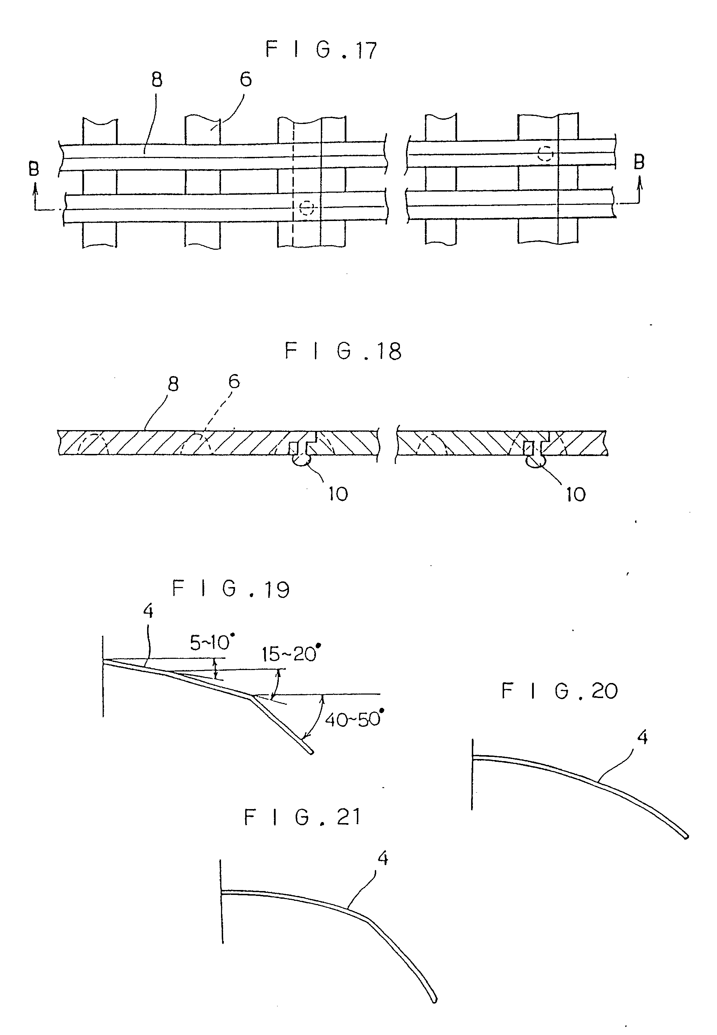

In case the front member 1 is fabricated by monoblock forming, molds thereof become complicated and are limited in dimentions. Threfore, FIGS. 17 and 18 illustrate examples that unit members composing the front member 1 are first molded, and then molded unit members are joined together using snap members 10.

FIGS. 19 to 21 show different shapes (half) of the draining ribs 4 fitted onto the back member 2: The draining rib 4 of FIG. 19 shows a shape that the rib 4 inclines downward step by step from the center to right and left thereof. FIG. 20 shows a shape that the rib 4 inclines gradually downward from the center to right and left in a curved form. FIG. 21 shows a shape of a two-step curved draining rib 4. Intervals between the draining ribs 4 are not necessarily in a uniform pitch arrangement but may be wider in proportion to upper draining ribs 4. As the volume of muddy water splashed becomes smaller and smaller with the ascent of the muddy water, the pitch between the upper ribs 4 may be wider.

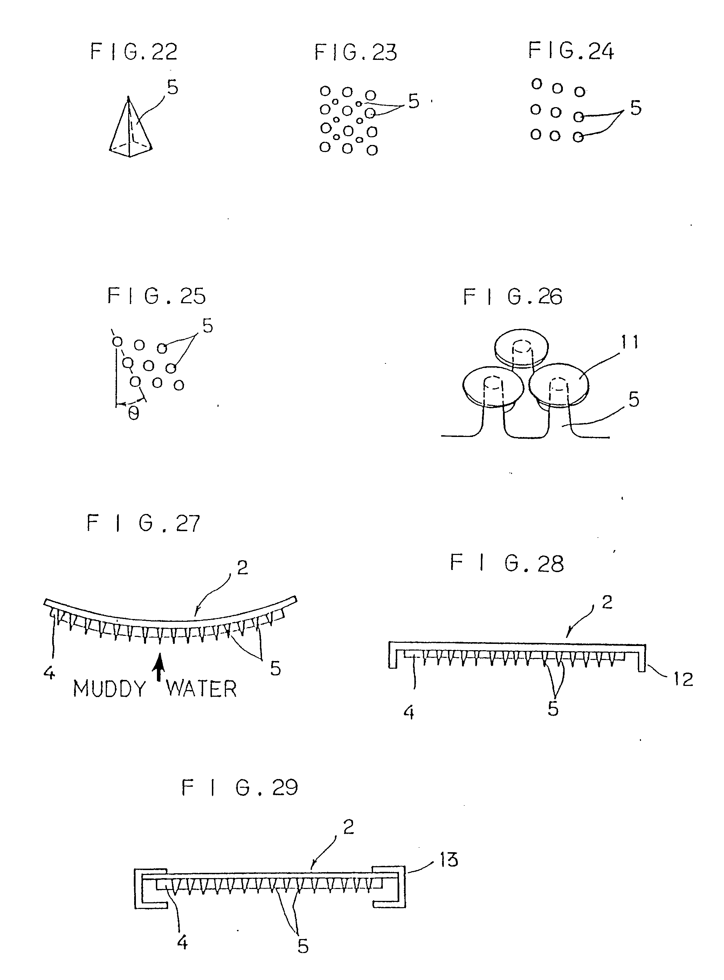

FIG. 22 shows the projection 5 formed in a quadrangular pyramid. However, it may be a traingular pyramid, other angular pyramid, oval cone or the like. FIGS. 23 to 25 show examples of arrangement methods of the projections 5: FIGS. 23 and 24 show examples that the projections 5 are arranged perpendicularly in the longitudinal direction. FIG. 23 shows an example that different-sized projections 5 are combined and arranged. FIG. 25 shows another example that inclination θ of the projections 5 is made between 30 ° and 60° as against a vertical line. As muddy water hitting the projections 5 drains along narrow spaces among the projections 5, it is needless to say that the arrangement of the projections 5 must be so designed that draining is smoothly carried out. FIG. 26 shows that umbrellas 11 are fitted onto the tops of the projections 5, which performs function that muddy water entering the narrow spaces among the projections 5 is prevented from springing back, i.e., the umbrellas 11 fulfils a splash preventing function.

FIGS. 27 to 29 show modifications of the back member 2: The back member 2 shown in FIG. 27 is effective to put muddy water hitting against the member 2 in two directions - right and left -, as the both ends thereof curve backward, resulting in an increase of draining effect. The back member 2 of FIG. 28 shows that the both ends thereof are not formed into the L-shaped parts 3 but into simple bends 12. FIG. 29 shows an example that the both ends are not formed into the L-shaped parts 3 nor into the simple bends 12, but that U-shaped members 13 are adopted.

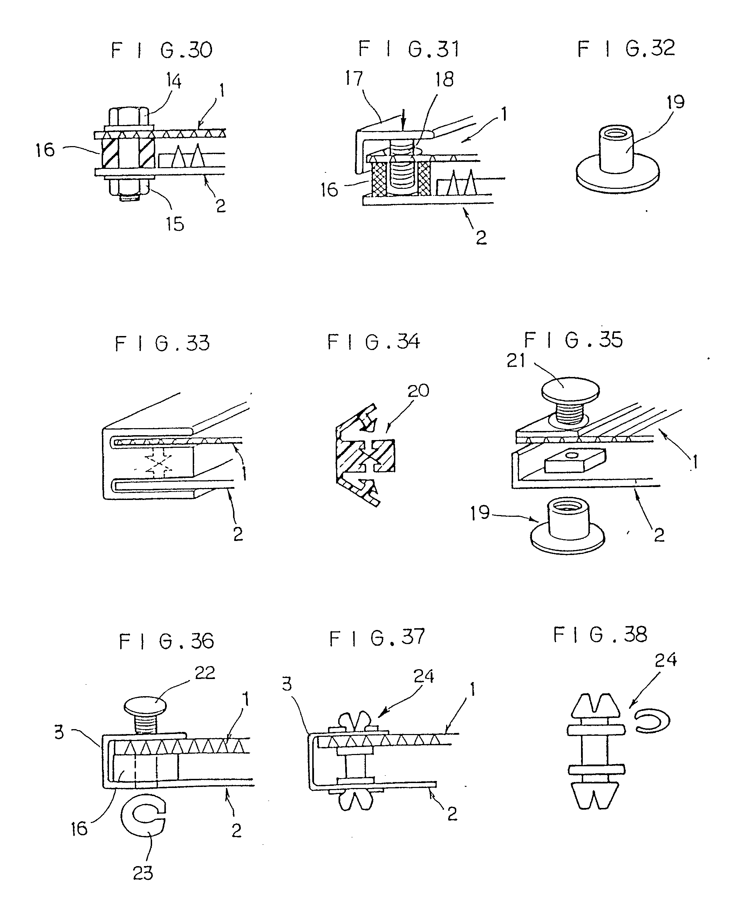

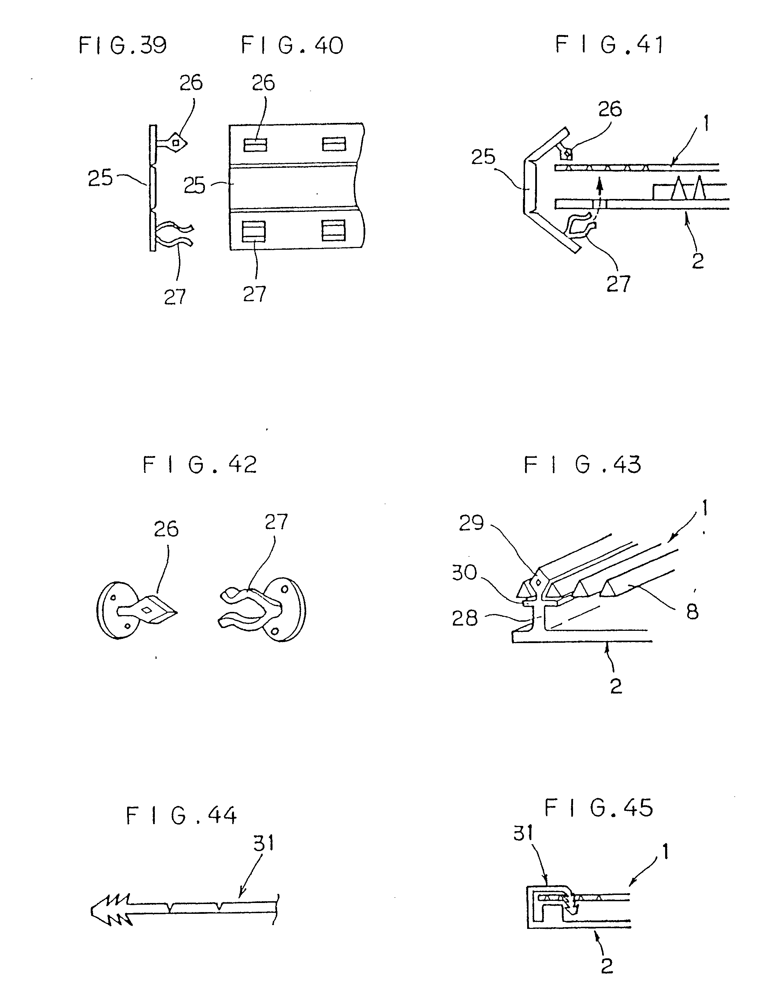

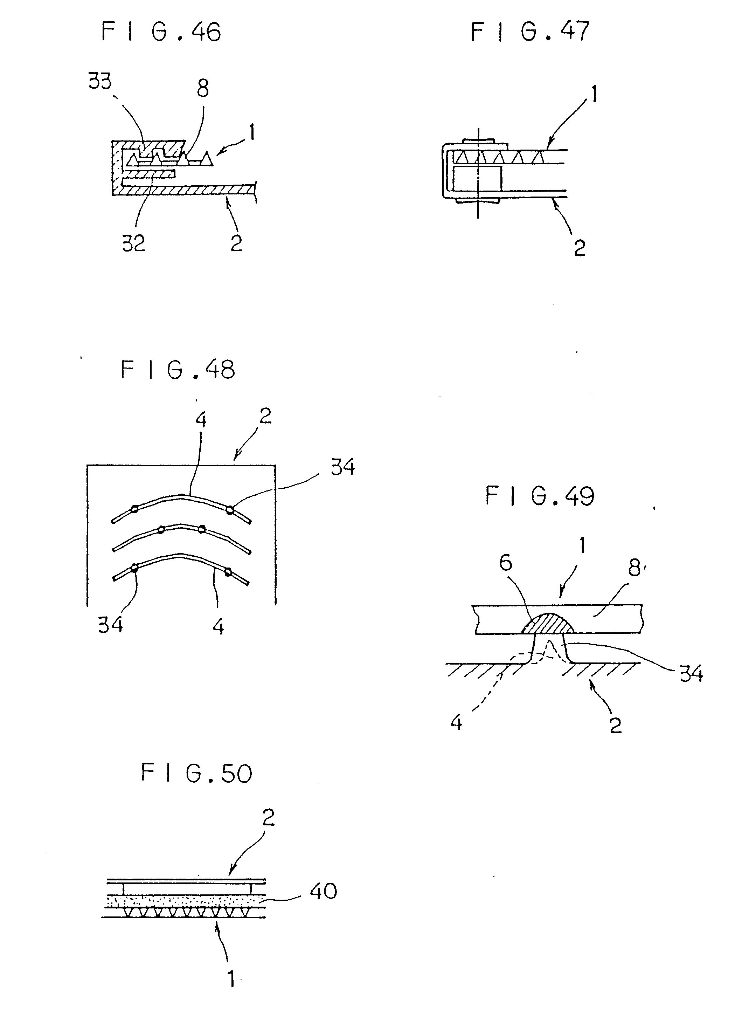

FIGS. 30 to 47 show various examples of means to fix the front member 1 and the back member 2 at a regular interval: FIG. 30 shows an example that the two members are fixed using a bolt 14 a nut 15 with the insertion of a rubber spacer 16 between the two members. FIG. 31 shows another example that the spacer 16 is put between the two members, and a male screw 18 of a L-shaped member 17 is inserted into a female screw 19 as shown in FIG. 32 placed in the spacer 16. FIG. 33 shows yet another example that the two members are fixed at a predetermined interval using a fastening 20 made from synthetic resins and the like as shown in FIG. 34. An example of FIG. 35 shows a method that a male screw 21 is screwed into the female screw 19 placed backward of the back member 2 from the front member 1 through the back member 2. In this case, the two members may be fixed by means of inserting the male screw 21 into the female screw 19 without threading. FIG. 36 shows still another example that a screw 22 is fixed to a C-ring 23 placed on the backside of the back member 2 through the L-shaped part 3, the front member 1, the spacer 16 and the back member 2 in order mentioned. FIG. 37 shows further example that the both members are fixed using a locking member 24 as shown in FIG. 38. FIGS. 39 to 41 show examples that the front member 1 and the back member 2 are fixed at a regular interval using a fastener consisting of a male part 26 and a female part 27 fitted on a plate 25 forming a U shape when being bent. FIG. 42 shows an example that the male part 26 and the female part 27 of FIG. 39 are fabricated separetely. FIG. 43 shows another example that the front member 1 and the back member 2 are fixed at a predetermined interval which is made by means that a wall 28 is formed on each longitudinal edge side of the back member 2, and a rhombic part 29 is formed on the top of each wall 28, and also a horizontal strip 30 is formed just under the rhombic part 29, and then the rhombic part 29 is slided or thrust in between the longitudial members 8 of the front member 1. FIG. 44 shows that a flexible fastening 31 in a strap style is formed on each edge side of the back member 2, and a pointed end of the fastening 31 is inserted into a space between the longitudial members 8 of the front member 1 as shown in FIG. 45 so that the front and back members are fixed at a regular interval. FIG. 46 shows still another example that a lower horizontal strip 32 is formed on each longitudinal edge side of the back member 2, and an upper horizontal strip 33 having grooves, into which the longitudinal members 8 of the front member 1 are to be slided above the lower horizontal strip 32, are formed. FIG. 47 shows yet another example that the both members are fixed by a rivet.

The back members 2 of FIGS. 48 and 49 indicate that interval retaining protrusions 34 are fitted over the draining ribs 4 of the back members 2. The protrusions 34 directly come in contact with the lateral members 6 of the front member 1 and keep a regular interval between the front and back members. In this example, the height of the ribs 4 is made at 9 mm., and those of the protrusions 34 and the projections 5 are made at 13 mm. and 11mm. respectively.

The mudguard of FIG. 50 illustrates an example that a middle member 40 is situated in between the front member 1 and the back member 2.

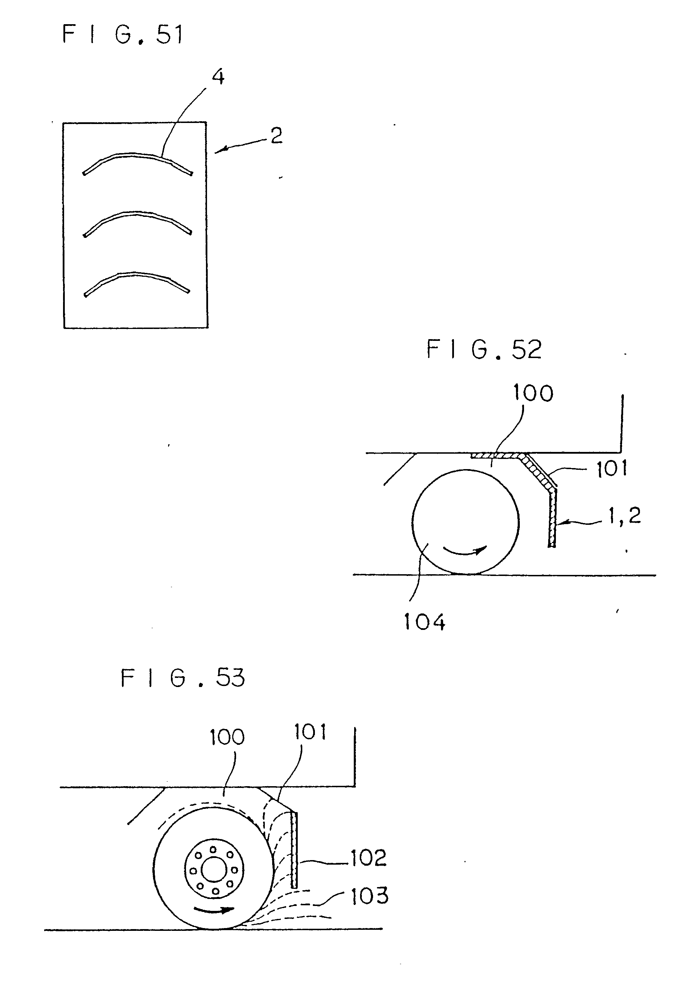

The middle member 40 has water permeability and three-dimensional, irregular-shaped foam structure. Such materials as Scott foam, hessian cloth, hair felt and palm rock are suitable for manufacture of the middle member 40. That is, materials which are light, have a large porous rate, excellent flexibility and characteristic of easily absorbing energy of water are quite suitable. In case of adopting the middle member 40, the back member 2 without projections 5 as shown in FIG. 51 may be used (with projections 5 may also be used).

FIG. 52 shows an example that the mudguard is attached to a tire house 100. It is desirable to attach the mudguard up to near the top of the tire 104.

## Claims

1. A vehicle mudguard comprising:
a front member having openings facing the tire side;
a back member arresting and draining water passed through said openings;
a space made between said front and back members;
draining ribs fitted on the front part of said back member in the vertical direction; and
a plurality of projections arranged, at least, among said ribs.

2. The vehicle mudguard according to claim 1 whrein said openings are formed between lateral members arranged at some intervals.

3. The vehicle mudguard according to claim 2 wherein vertical width of the top opening is widest and those of other openings gradually become narrower toward the bottom of the openings.

4. The vehicle mudguard according to claim 2 wherein said openings incline upward from the front to the back side thereof respectively.

5. The vehicle mudguard according to claim 1 wherein said ribs, each of which has a shape that both ends thereof decline gradually downward from the center thereof, are arranged at regular intervals in the vertical direction.

6. The vehicle mudguard according to claim 1 wherein the height of said ribs is each formed at two to three times as high as width of their bases.

7. The vehicle mudguard according to claim 1 wherein said projections are made two to six per square centimeter.

8. The vehicle mudguard according to claim 1 wherein said front member is formed into a grid shape or a staggered shape by assembling longitudinal members and lateral members, and openings are formed among said members.

9. The vehicle mudguard according to claim 8 wherein, out of said longitudinal and lateral members constituting said front member, surface films, which are to be bent backward by hydraulic pressure of muddy water splashed by the tire, are fitted on the top of said longitudinal or lateral members situated on the front side of said front member or on the base of said either members situated on the backside of said front member to cover part of said openings.

10. The vehicle mudguard comprising:
said front member having openings facing the tire side;
said back member arresting and draining water passed through said openings;

said space made between said front and back members; and

a middle member having water permeability as well as a three-dimensional, irregular-shaped foam structure situated in between said space.

11. The vehicle mudguard according to claim 10 wherein said ribs are fitted on the front part of said back member in the vertical direction and a plurality of said projections are arraged, at least, among said ribs.

F I G . 1

F I G . 2

F I G . 3

F I G . 4

FIG.5

FIG.6

FIG.7

FIG.8

FIG.9

FIG.10

F I G .11

F I G .12

F I G .13

F I G .14

F I G .15

F I G .16

F I G . 17

F I G . 18

F I G . 19

5~10°

15~20°

40~50°

F I G . 20

F I G . 21

FIG.22

FIG.23

FIG.24

FIG.25

FIG.26

FIG.27

MUDDY WATER

FIG.28

FIG.29

F I G.30

F I G.31

F I G.32

F I G.33

F I G.34

F I G.35

F I G.36

F I G.37

F I G.38

FIG.39    FIG.40    FIG.41

FIG.42    FIG.43

FIG.44    FIG.45

FIG.46

FIG.47

FIG.48

FIG.49

FIG.50

F I G. 51

F I G. 52

F I G. 53

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| D,A | GB-A-2132148 (NETLON)<br>* page 3, lines 80 - 123; figures 8, 9 * | 1, 5, 8 | B62D25/18 |
| D,X | | 10 | |
| A | EP-A-0202059 (SULLIVAN)<br>* page 22, line 1 - page 25, line 12; figures 12-14 * | 1 | |
| A | GB-A-2198696 (JONES)<br>* abstract * | 1, 2, 4 | |
| A | DE-B-2524344 (LEIMEISTER)<br>* column 2, lines 49 - 64; figures * | 1, 3 | |
| A | EP-A-0243283 (FICHET)<br>* abstract; figures * | 1, 8, 10 | |
| A | GB-A-2146598 (UNIROYAL)<br>* page 3, lines 46 - 77; figures 5-7 * | 9 | |
| A | US-A-4598000 (MANTARRO)<br>* abstract; figures * | 10 | TECHNICAL FIELDS SEARCHED (Int. Cl.5 )<br><br>B62D |

The present search report has been drawn up for all claims

| Place of search | Date of completion of the search | Examiner |
|---|---|---|
| BERLIN | 21 JANUARY 1991 | BROYDE, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)